# EUROPEAN PATENT SPECIFICATION

(11) **EP 4 009 672 B1**
(45) Date of publication and mention of the grant of the patent: **11.10.2023**
(21) Application number: 20212078.8
(22) Date of filing: 07.12.2020
(51) Int. Cl.: H04W 4/029, H04W 4/40

(54) **DUMP PLATE DEVICE, DUMP PLATE SYSTEM, AND METHOD OF HANDLING DUMP PLATE DEVICE**
KIPPPLATTENVORRICHTUNG, KIPPPLATTENSYSTEM UND VERFAHREN ZUR HANDHABUNG EINER KIPPPLATTENVORRICHTUNG
DISPOSITIF DE PLAQUE D'AVANT-FOYER, SYSTÈME DE PLAQUE D'AVANT-FOYER ET PROCÉDÉ DE MANIPULATION D'UN DISPOSITIF DE PLAQUE D'AVANT-FOYER

(43) Date of publication of application: 08.06.2022
(73) Proprietor: Volvo Autonomous Solutions AB, 405 08 Göteborg (SE)
(72) Inventor: SJÖBERG, Johan, 722 19 Västerås (SE); SKILLSÄTER, Calle, 644 36 Torshälla (SE)
(74) Representative: Kransell & Wennborg KB

(56) References cited:
- CN-A- 105 966 260
- US-A1- 2014 324 303
- US-A1- 2015 161 872

## Description

### TECHNICAL FIELD

The invention relates to a dump plate device, a dump plate system comprising a dump plate device, and a method of handling a dump plate device having a dump plate for supporting a vehicle adjacent to an edge at a worksite when dumping a load over the edge by the vehicle.

The invention is applicable to load carrying vehicles and to worksites involving load carrying vehicles. The load carrying vehicles may be industrial construction machines, in particular autonomous industrial load carriers. Although the invention will mainly be described with respect to an autonomous hauler, the invention is not restricted to this particular machine.

### BACKGROUND

When a load is to be dumped over an edge at a worksite by means of a manually driven load carrying vehicle, a dump plate may be used to prevent the vehicle from falling over the edge. The dump plate may be a steel plate put on the ground next to the edge and ending with a physical barrier. The dump plate evenly distributes the load of the vehicle to the ground. The dump plate thereby prevents the wheels of the vehicle to sink down into the ground. In this way, the ground adjacent to the edge can be kept substantially intact. The intactness of the ground adjacent to the edge enables the vehicle to be driven closer to the edge.

Document US2015161872 discloses assigning wireless tags to wearables and worksite objects in a worksite in order to determine position of both. In case the position of the wearable and the worksite object collide, a warning is issued.

### SUMMARY

For a worksite involving autonomous load carrying vehicles, the task of unloading material over an edge is complex. The path planner for the vehicles needs to know the position of the dump plate with high accuracy in order for the vehicles to safely navigate to and from the dump plate. One approach to set this position is to walk to the dump plate and measure the position manually. This process is however laborious, inaccurate and possibly dangerous. Moreover, the dump plate may be frequently moved to different positions at the worksite, which further enhances the drawbacks with a manual measurement of the position of the dump plate.

An object of the invention is to provide a dump plate device that facilitates dumping of a load over an edge by a vehicle in a safe and reliable manner.

According to a first aspect, the object is achieved by a dump plate device according to claim 1. The dump plate device comprises a dump plate for supporting a vehicle adjacent to an edge at a worksite when dumping a load over the edge by the vehicle. The dump plate device further comprises at least one positioning device fixed to the dump plate, wherein each positioning device is configured to wirelessly transmit one or more plate position signals containing information indicative of an actual plate position of the dump plate.

By means of the one or more positioning devices, the position of the dump plate can be determined with high accuracy. This in turn facilitates dumping of the load over the edge, and improves load handling efficiency and safety at a worksite. The accurately determined actual plate position is particularly advantageous for worksites involving one or more autonomous vehicles which then can reliably and safely navigate to and from the dump plate. The accurately determined actual plate position is however also advantageous in other situations, for example when manually driving a vehicle onto the dump plate and the sight is obstructed and/or where the actual plate position is not known.

Due to the wireless transmission of the one or more plate position signals, the actual plate position can be reliably obtained even if the dump plate is covered by soil. Since the dump plate device is provided with the at least one positioning device, the dump plate device may be referred to as an intelligent dump plate.

According to one embodiment, each positioning device comprises a satellite communication receiver. The satellite communication receiver may for example be a global navigation satellite system (GNSS) sensor. The GNSS sensor may be arranged to receive GNSS signals from a remote source. The satellite communication receiver may be a satellite communication transceiver, such as a GNSS transceiver.

According to one embodiment, each positioning device comprises a radio transmitter. The dump plate device may comprise at least two radio transmitters. In this case, the actual plate position can be determined by means of triangulation based on the plate position signals transmitted from each radio transmitter.

According to one embodiment, the radio transmitter is an ultra wideband, UWB, transmitter. Ultra-wideband is a technology for transmitting information spread over a large bandwidth (e.g. larger than 500 MHz).

According to one embodiment, the one or more plate position signals contain information indicative of an absolute position of the dump plate.

According to one embodiment, the at least one positioning device comprises a plurality of positioning devices distanced from each other. In this case, the actual plate position can be determined by means of triangulation based on the plate position signals transmitted from each positioning device. Alternatively, or in addition, the orientation of the dump plate can be determined based on the plate position signals from the two or more positioning devices.

According to one embodiment, the one or more plate position signals contain information indicative of an orientation of the dump plate. To this end, the dump plate device may comprise at least two positioning devices fixed to the dump plate and separated from each other. Based on the plate position signals from the at least two positioning devices, a heading of the dump plate can be determined. Alternatively, or in addition, the dump plate device may comprise an orientation determining device, such as a compass. In this case, the information indicative of the orientation may be determined based on data from the orientation determining device.

According to one embodiment, the dump plate comprises a base part and a barrier raised relative to the base part, wherein the barrier is configured to be contacted by two wheels of the vehicle when dumping the load over the edge by the vehicle. The barrier may be substantially parallel with, and/or substantially coinciding with, the edge when the dump plate is positioned on the ground adjacent to the edge.

The base part may be flat and substantially horizontally oriented when the vehicle drives onto the dump plate. The base part may have a length larger than a length of a wheelbase of the vehicle and a width larger than a width of the wheelbase. The base part may be elongated, for example rectangular.

According to one embodiment, the one or more plate position signals contain information indicative of a barrier position of the barrier. Knowledge of the barrier position is advantageous for effectively and safely dump the load over the edge.

According to one embodiment, a barrier position of the barrier in relation to the actual plate position is predetermined. By knowing an offset between the actual plate position and the barrier position, also the barrier position can be determined based on the actual plate position and the offset.

The invention also relates to a dump plate system comprising a dump plate device according to the present invention.

According to one embodiment, the dump plate system further comprises at least one receiver configured to receive the one or more plate position signals transmitted from the at least one positioning device. In case the at least one positioning device is an UWB transmitter, the at least one receiver may be an UWB receiver.

According to one embodiment, the dump plate system further comprises the vehicle.

According to one embodiment, the vehicle is an autonomous vehicle. The vehicle may for example be an autonomous, battery-electric, load carrier. However, various embodiments of the described invention are equally applicable for manually controlled or semiautonomous vehicles.

According to one embodiment, the vehicle comprises one or more of the at least one receiver. The vehicle comprising the one or more receivers may be an autonomous vehicle, a vehicle arranged to move the dump plate, or another vehicle operating at the worksite. The vehicle may further comprise a transmitter arranged to generate position data indicative of the actual plate position of the dump plate based on the one or more plate position signals. The position data may be sent to a fleet management system of the dump plate system.

According to one embodiment, the vehicle is configured to determine the actual plate position of the dump plate based on the one or more plate position signals.

According to one embodiment, the vehicle is configured to generate position data indicative of the actual plate position of the dump plate based on the one or more plate position signals.

According to one embodiment, the dump plate system further comprises at least one stationary base station comprising one or more of the at least one receiver. In this case, the at least one base station may be configured to receive the one or more plate position signals transmitted from the at least one positioning device, and to generate position data indicative of the actual plate position of the dump plate based on the one or more plate position signals. The position data may be sent to a fleet management system of the dump plate system. The base station may for example comprise a pole. The pole may stand on the ground at the worksite, e.g. adjacent to the dump plate device.

According to one embodiment, the vehicle is configured to wirelessly receive the position data. In this case, the vehicle may be in signal communication with the base station.

According to one embodiment, the dump plate system further comprises a control system. The control system comprises at least one data processing device and at least one memory having a computer program stored thereon. The computer program comprises program code which, when executed by the at least one data processing device, causes the at least one data processing device to perform the steps of providing the actual plate position of the dump plate based on the one or more plate position signals; comparing the actual plate position with a previous plate position of the dump plate; and determining that the actual plate position has changed if the actual plate position differs from the previous plate position. At a first time instant, the actual plate position may be stored. At a second time instant, following the first time instant, the actual plate position from the first time instant may be referred to as the previous plate position. The actual plate position at the second time instant may thus be compared with the previous plate position at the first time instant to determine whether the actual plate position has changed. The control system may be provided in any of the vehicles, in the dump plate device, in the base station, elsewhere at the worksite and/or remote from the worksite. The computer program may further comprise program code which, when executed by the at least one data processing device, causes the at least one data processing device to perform, or command performance of, various steps as described herein.

According to one embodiment, the computer program comprises program code which, when executed by the at least one data processing device, causes the at least one data processing device to perform the step of commanding issuance of a warning upon determining that the actual plate position has changed. The warning may for example be an audible warning, a visible warning and/or a warning signal. Each vehicle may stop automatically in response to the warning signal.

The invention also relates to a method of handling a dump plate device having a dump plate for supporting a vehicle adjacent to an edge at a worksite when dumping a load over the edge by the vehicle. The method comprises wirelessly transmitting one or more plate position signals containing information indicative of an actual plate position of the dump plate by means of at least one positioning device fixed to the dump plate. The method may be implemented by means of any type of dump plate device or dump plate system as described herein.

According to one embodiment, the method further comprises determining whether the actual plate position of the dump plate has changed.

According to one embodiment, the method further comprises issuing a warning upon determining that the actual plate position of the dump plate has changed.

According to one embodiment, the method further comprises controlling an autonomous vehicle based on the actual plate position of the dump plate. For example, a route for the autonomous vehicle can be calculated based on the actual plate position of the dump plate.

According to one embodiment, the method further comprises moving the dump plate device by means of a vehicle; determining a coarse plate position of the dump plate based on a vehicle position of the vehicle after having moved the dump plate device; and determining the actual plate position of the dump plate by means of the at least one positioning device based on the coarse plate position. In this way, relocation of the dump plate device is facilitated since the vehicle moving the dump plate device does not have to move the dump plate device with accuracy. The vehicle for moving the dump plate device may for example be a wheel loader or an excavator. The vehicle moving the dump plate device can thereby assist in determining the actual plate position of the dump plate. The vehicle position may be a position determined by a global positioning system, GPS, sensor of the vehicle after having moved the dump plate device. In addition to the GPS sensor, the vehicle moving the dump plate device does not require any additional equipment for determining a position of the dump plate.

Further advantages and advantageous features of the invention are disclosed in the following description and in the dependent claims.

### BRIEF DESCRIPTION OF THE DRAWINGS

With reference to the appended drawings, below follows a more detailed description of embodiments of the invention cited as examples.

In the drawings:
Fig. 1 schematically illustrates a top view of a dump plate system according to one example of the invention;
Fig. 2 schematically represents a partial side view of the dump plate system when a vehicle drives towards a dump plate;
Fig. 3 schematically represents a partial side view of the dump plate system the vehicle is positioned on the dump plate and dumps a load over an edge;
Fig. 4 schematically represents a top view of a dump plate system according to a further example of the invention when a dump plate has been moved by a vehicle;
Fig. 5 schematically represents a top view of the dump plate system in Fig. 4 when a vehicle drives towards a dump plate;
Fig. 6 schematically represents a top view of the dump plate system in Figs. 4 and 5 when the vehicle is positioned on the dump plate and is about to dump a load over an edge; and
Fig. 7 is flowchart outlining the general steps of the method according to the invention.

### DETAILED DESCRIPTION OF EXAMPLE EMBODIMENTS OF THE INVENTION

In the following, a dump plate device, a dump plate system comprising a dump plate device, and a method of handling a dump plate device having a dump plate for supporting a vehicle adjacent to an edge at a worksite when dumping a load over the edge by the vehicle, will be described. The same reference numerals will be used to denote the same or similar structural features.

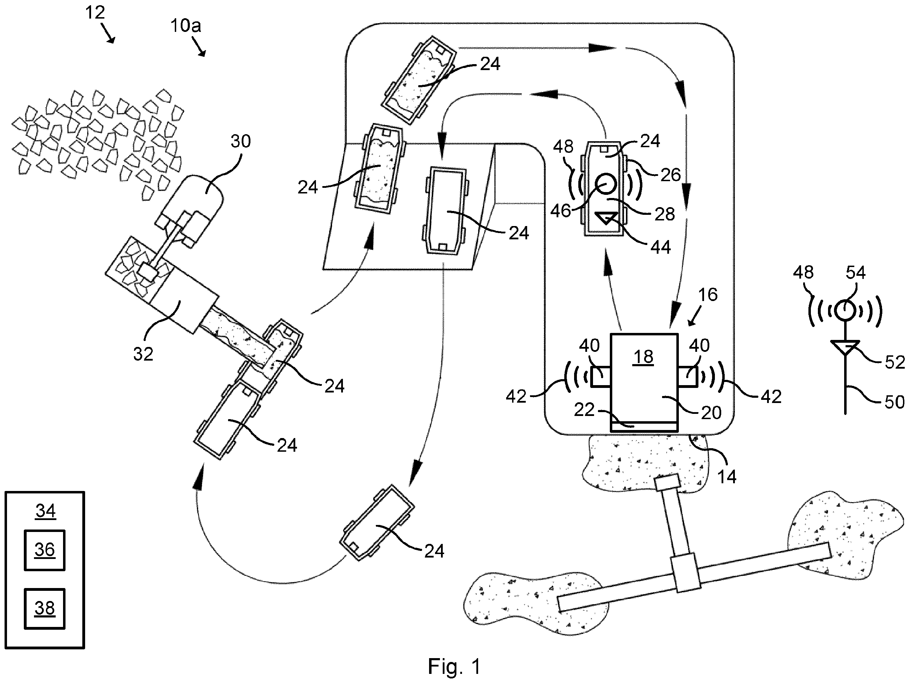

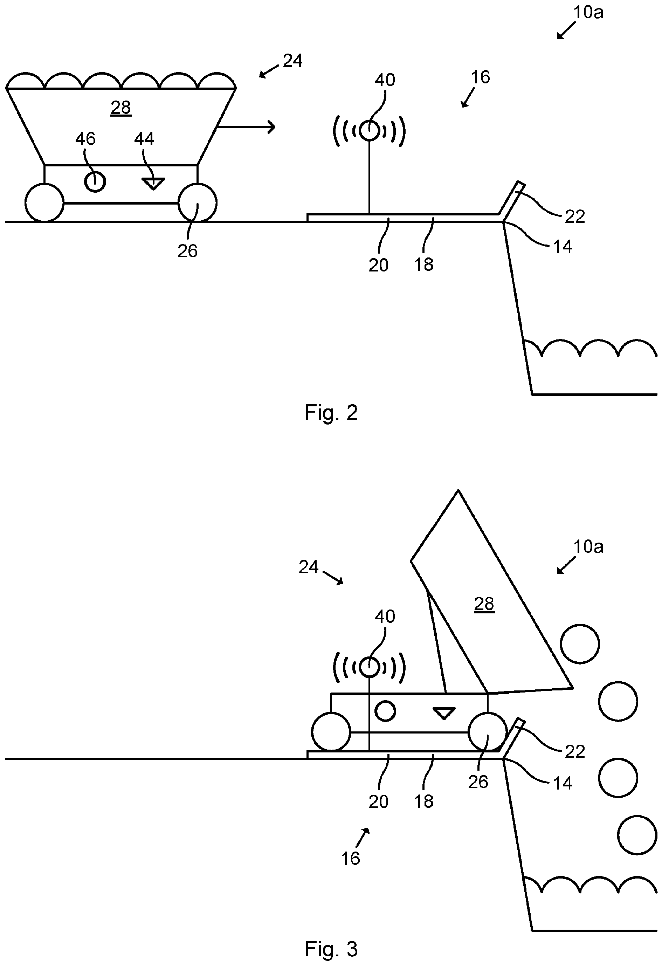

Fig. 1 schematically illustrates a top view of a dump plate system 10a according to one example of the invention, and Figs. 2 and 3 schematically represent partial side views of the dump plate system 10a. With collective reference to Figs. 1 to 3, the dump plate system 10a is arranged at a worksite 12. The worksite 12 comprises an edge 14. The edge 14 separates a geodetically high ground from a geodetically low ground. The worksite 12 in Fig. 1 may for example be a stone pit. The material can be dumped over the edge 14 to a subsequent process step of the material. In the specific example of a stone pit, the subsequent process step may be a stone crushing step.

The dump plate system 10a comprises a dump plate device 16. The dump plate device 16 comprises a dump plate 18. The dump plate 18 in turn comprises a base part 20 and a barrier 22. The base part 20 is flat and laid horizontally on the ground. The barrier 22 is raised from the base part 20. In this example, the barrier 22 extends at an angle of approximately 60 degrees to the base part 20. The dump plate 18 is positioned adjacent to the edge 14 where the load is to be dumped over the edge 14. As shown in Figs. 1 to 3, the barrier 22 is substantially coinciding with the edge 14. The base part 20 may be provided with spikes (not shown) protruding down into the ground. In this way, the dump plate 18 rests more stably on the ground.

The dump plate system 10a of this example further comprises a plurality of autonomous haulers 24. The haulers 24 are configured carry a load, to drive onto the dump plate 18 and to dump the load over the edge 14. Each hauler 24 is thereby one example of a vehicle for dumping a load over the edge 14 according to the invention.

Each hauler 24 comprises a plurality of wheels 26 forming a wheelbase, and a container 28 for carrying a load. Each hauler 24 can stop on the base part 20 when dumping a load over the edge 14 such that the front wheels 26 are in contact with the barrier 22. The dump plate 18 is thus configured to support one of the haulers 24 when dumping a load over the edge 14. Moreover, the base part 20 of the dump plate 18 is rectangular and elongated in a direction perpendicular to the edge 14. An area of the base part 20 is larger than an area corresponding to the wheelbase.

The dump plate system 10a of this example further comprises an excavator 30 and a conveyor 32. The excavator 30 loads material to the conveyor 32. The haulers 24 are autonomously controlled to drive to an outlet of the conveyor 32 for being loaded with material.

The dump plate system 10a further comprises a control system 34. The control system 34 comprises a data processing device 36 and a memory 38. The memory 38 has a computer program stored thereon. The computer program comprises program code which, when executed by the data processing device 36 causes the data processing device 36 to perform, or command performance of, various steps as described herein. A fleet management system comprising a path planner for the haulers 24 is implemented in the control system 34.

In order to accurately dump a load over the edge 14, it is desired that the haulers 24 (or other dumping vehicle) can be positioned very accurately relative to the dump plate 18. There are several reasons for this desire.

An inaccurate positioning of the dump plate 18 might result in a failure of the hauler 24 to dump its entire load over the edge 14. For example, the load may instead be partly or entirely dumped onto the dump plate 18.

Furthermore, in case the hauler 24 drives onto the dump plate 18 at an angle relative to the dump plate 18, one of its front wheels 26 will hit the barrier 22 before the other front wheel 26. As a result, the container 28 of the hauler 24 might collide with the barrier 22 during tilting of the container 28 such that tipping of the entire load is prevented.

Furthermore, in case the position of the dump plate 18 is not accurately known, there is an increased risk that the haulers 24 drive forcefully against the barrier 22. This might cause the dump plate 18 to move slightly on the ground. This in turn makes the position of the dump plate 18 even more inaccurate and the above problems become augmented. Although the problem of movement of the dump plate 18 can be prevented to some extent by the provision of spikes below the dump plate 18 that protrudes down into the ground, these spikes should not secure the dump plate 18 too forcefully to the ground since this makes it more difficult to intentionally move the dump plate 18.

Furthermore, an inaccurate positioning of the dump plate 18 increases the risk of a severe safety accident where the hauler 24 falls over the edge 14.

In order to provide a more accurate knowledge about the position of the dump plate 18, the dump plate device 16 of this example further comprises two GNSS transceivers 40. The GNSS transceivers 40 are fixed to the dump plate 18 at known positions, here at opposite sides of the base part 20. Each GNSS transceiver 40 is an example of a positioning device according to the invention. The dump plate device 16 may further comprise a battery (not shown) for providing electric power to the GNSS transceivers 40.

Each GNSS transceiver 40 is configured to accurately determine its position based on received GNSS signals from a remote source. Each GNSS transceiver 40 is further configured to wirelessly send plate position signals 42 with information regarding its absolute position. Since the GNSS transceivers 40 are fixed to the dump plate 18 at known positions, an actual plate position of the dump plate 18 can be accurately determined based on the plate position signals 42. Also the orientation of the dump plate 18, a barrier position of the barrier 22, and a barrier orientation of the barrier 22 can be accurately determined based on the plate position signals 42 from the two GNSS transceivers 40.

The plate position signals 42 containing information indicative of the actual plate position can be distributed in the dump plate system 10a in a wide range of ways. In this example, each hauler 24 further comprises a vehicle receiver 44 and a vehicle transmitter 46. By means of the vehicle receiver 44, each hauler 24 can receive the plate position signals 42 transmitted from the GNSS transceivers 40. By means of the vehicle transmitter 46, each hauler 24 can wirelessly distribute information indicative of the actual plate position as position data 48 based on the plate position signals 42.

The dump plate system 10a of this example further comprises a base station 50, here exemplified as a pole. The base station 50 is fixed to the ground. The base station 50 comprises a base receiver 52 and a base transmitter 54. By means of the base receiver 52, the base station 50 can receive the plate position signals 42 transmitted from the GNSS transceivers 40. By means of the base transmitter 54, the base station 50 can wirelessly distribute information indicative of the actual plate position as position data 48 based on the plate position signals 42. The position data 48 may for example be sent from the base station 50 to the control system 34 in order for the fleet management system to know the exact position of the dump plate 18 and to thereby be able to plan the routing of the haulers 24 to and from the dump plate 18 accordingly. The dump plate system 10a thereby provides an efficient and safe control of material dumping over the edge 14.

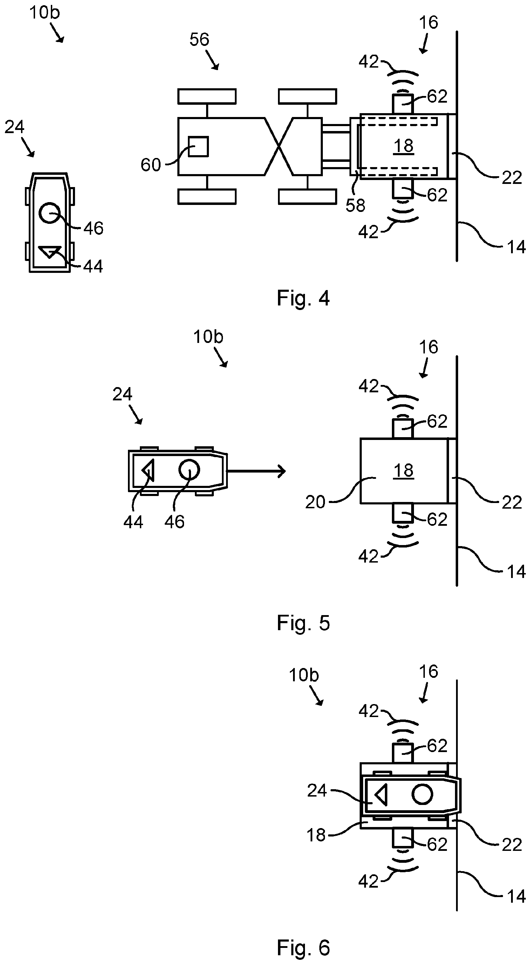

Fig. 4 schematically represents a top view of a dump plate system 10b according to a further example of the invention. From time to time, the dump plate 18 needs to be relocated within the worksite 12. In this case, the routing of the haulers 24 needs to be immediately updated based on the latest actual plate position of the dump plate 18 in order to avoid any downtime of the worksite 12 and to avoid safety issues.

In Fig. 4, the dump plate device 16 has been lifted and moved to a new position by a wheel loader 56 of the dump plate system 10b. As shown in Fig. 4, the wheel loader 56 comprises an implement 58, here exemplified as a fork. In contrast to the haulers 24, the wheel loader 56 of this illustrating example does not comprise any vehicle receiver or vehicle transmitter corresponding to the vehicle receiver 44 and the vehicle transmitter 46. The wheel loader 56 however comprises a GPS sensor 60.

The dump plate system 10b in Fig. 4 differs from the dump plate system 10a in that the dump plate system 10b comprises a dump plate 18 having two radio transmitters 62 instead of the GNSS transceivers 40. In this example, each radio transmitter 62 is an UWB transmitter. Each radio transmitter 62 is a further example of a positioning device according to the invention. The vehicle receivers 44 of the haulers 24 may in this example comprise a UWB receiver. In contrast to the GNSS transceivers 40 in Figs. 1 to 3 which provide a global positioning system, the radio transmitters 62 have a limited range and only provide a local positioning system.

Once the dump plate device 16 has been put on the ground by the wheel loader 56, the wheel loader 56 communicates its position as determined by the GPS sensor 60, for example to the fleet management system in the control system 34. Although the GPS sensor 60 as such may provide an accurate vehicle position, the actual plate position relative to the vehicle position may not be known. The reasons for this may for example be that the position of the implement 58 relative to the vehicle position is unknown or inaccurate, or that the position of the dump plate 18 relative to the implement 58 when lifted is unknown. The dump plate 18 may also be suspended in a chain from the wheel loader 56 when carried between two positions. In this case, the actual plate position relative to the vehicle position is even more uncertain.

In the invention, the vehicle position from the wheel loader 56 when putting the dump plate 18 on the ground is treated as a coarse plate position. The dump plate device 16 may alternatively be moved by the excavator 30 in Fig. 1.

Fig. 5 schematically represents a further top view of the dump plate system 10b. In Fig. 5, one of the haulers 24 drives towards the dump plate 18 based on the coarse plate position. When the hauler 24 is within a signal range from the radio transmitters 62, such that the plate position signals 42 can be received by the vehicle receiver 44, the actual plate position and the orientation of the dump plate 18 can be accurately determined by means of triangulation based on the plate position signals 42 transmitted from the radio transmitters 62. Since the absolute position of the hauler 24 is known, also the absolute position of the dump plate 18 can be accurately determined based on the plate position signals 42 transmitted from the radio transmitters 62. The actual plate position determined by the hauler 24 may then be sent as position data 48 to the control system 34 in order to share the actual plate position with the other haulers 24 and other vehicles. The local information provided by the radio transmitters 62 is thereby globalized by the hauler 24 in this example. The accurate determination of the actual plate position of the dump plate 18 by means of the radio transmitters 62 enables the driver of the wheel loader 56 to be relieved from the task of determining the actual plate position.

Also the base station 50 may be configured to receive the plate position signals 42 from the radio transmitters 62, to determine the actual plate position by means of triangulation based on the plate position signals 42, and to wirelessly communicate the determined actual plate position as position data 48 by means of the base transmitter 54. In this way, also the base station 50 can be used to globalize the actual plate position.

Fig. 6 schematically represents a top view of the dump plate system 10b in Figs. 4 and 5. In Fig. 6, the hauler 24 is positioned on the dump plate 18 and is about to dump a load over the edge 14.

The actual plate position is monitored over time, for example by means of the control system 34. The position of the dump plate 18 may be continuously or repeatedly monitored during the load handling operation at the worksite 12. In case the actual plate position changes, a warning may be issued. In the above example where the dump plate 18 is intentionally moved by the wheel loader 56, the warning may be issued to the driver of the wheel loader 56 who then can confirm that the dump plate 18 has been intentionally relocated. In case the dump plate 18 was not intentionally moved, issuance of a countermeasure may be commanded. The countermeasure may for example comprise stopping or reducing the speeds of the haulers 24. The determination of whether or not the actual plate position has been changed can be made based on the plate position signals 42 without necessarily globalizing the actual plate position.

The combination of the coarse positioning by the wheel loader 56 and the fine positioning by the radio transmitters 62 provide an effective and reliable method of accurately determining and updating the actual plate position. The method thus provides an advantageous tracking of dumping safety.

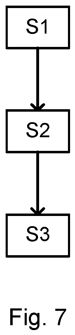

Fig. 7 is flowchart outlining the general steps of the method of handling the dump plate device 16 having the dump plate 18 for supporting the hauler 24 adjacent to the edge 14 at the worksite 12 when dumping a load over the edge 14 by the hauler 24 according to the invention. The method comprises a step S1 of wirelessly transmitting S1 one or more plate position signals 42 containing information indicative of an actual plate position of the dump plate 18 by means of at least one positioning device 40, 62 fixed to the dump plate 18. The method further comprises a step S2 of determining whether the actual plate position of the dump plate 18 has changed. The method further comprises a step S3 of issuing a warning upon determining that the actual plate position of the dump plate 18 has changed.

It is to be understood that the present invention is not limited to the embodiments described above and illustrated in the drawings; rather, the skilled person will recognize that many changes and modifications may be made within the scope of the appended claims.

## Claims

1. A dump plate device (16) comprising:
- a dump plate (18) for supporting a vehicle (24) adjacent to an edge (14) at a worksite (12) when dumping a load over the edge (14) by the vehicle (24);
wherein the dump plate device (16) further comprises:
- at least one positioning device (40, 62) fixed to the dump plate (18), wherein each positioning device (40, 62) is configured to wirelessly transmit one or more plate position signals (42) containing information indicative of an actual plate position of the dump plate (18).

2. The dump plate device (16) according to claim 1, wherein each positioning device (40, 62) comprises a satellite communication receiver (40).

3. The dump plate device (16) according to any of the preceding claims, wherein each positioning device (40, 62) comprises a radio transmitter (62).

4. The dump plate device (16) according to claim 3, wherein the radio transmitter (62) is an ultra wideband, UWB, transmitter.

5. The dump plate device (16) according to any of the preceding claims, wherein the one or more plate position signals (42) contain information indicative of an absolute position of the dump plate (18).

6. The dump plate device (16) according to any of the preceding claims, wherein the at least one positioning device (40, 62) comprises a plurality of positioning devices (40, 62) distanced from each other.

7. The dump plate device (16) according to any of the preceding claims, wherein the one or more plate position signals (42) contain information indicative of an orientation of the dump plate (18).

8. The dump plate device (16) according to any of the preceding claims, wherein the dump plate (18) comprises a base part (20) and a barrier (22) raised relative to the base part (20), wherein the barrier (22) is configured to be contacted by two wheels (26) of the vehicle (24) when dumping the load over the edge (14) by the vehicle (24).

9. The dump plate device (16) according to claim 8, wherein the one or more plate position signals (42) contain information indicative of a barrier position of the barrier (22).

10. The dump plate device (16) according to claim 8, wherein a barrier position of the barrier (22) in relation to the actual plate position is predetermined.

11. A dump plate system (10a, 10b) comprising a dump plate device (16) according to any of the preceding claims.

12. The dump plate system (10a, 10b) according to claim 11, further comprising at least one receiver (44, 52) configured to receive the one or more plate position signals (42) transmitted from the at least one positioning device (40, 62).

13. The dump plate system (10a, 10b) according to claim 11 or 12, further comprising the vehicle (24).

14. The dump plate system (10a, 10b) according to claim 13, wherein the vehicle (24) is an autonomous vehicle.

15. The dump plate system (10a, 10b) according to claim 13 or 14, when depending on claim 12, wherein the vehicle (24) comprises one or more of the at least one receiver (44).

16. The dump plate system (10a, 10b) according to claim 15, wherein the vehicle (24) is configured to determine the actual plate position of the dump plate (18) based on the one or more plate position signals (42).

17. The dump plate system (10a, 10b) when depending on claim 12, wherein the vehicle (24) is configured to generate position data (48) indicative of the actual plate position of the dump plate (18) based on the one or more plate position signals (42).

18. The dump plate system (10a, 10b) when depending on claim 12, further comprising at least one stationary base station (50) comprising one or more of the at least one receiver (52), wherein the at least one base station (50) is configured to receive the one or more plate position signals (42) transmitted from the at least one positioning device (40, 62), and to generate position data (48) indicative of the actual plate position of the dump plate (18) based on the one or more plate position signals (42).

19. The dump plate system (10a, 10b) according to claim 18, when depending on claim 13, wherein the vehicle (24) is configured to wirelessly receive the position data (48).

20. The dump plate system (10a, 10b) according to any of claims 11 to 19, further comprising a control system (34), the control system (34) comprising at least one data processing device (36) and at least one memory (38) having a computer program stored thereon, the computer program comprising program code which, when executed by the at least one data processing device (36), causes the at least one data processing device (36) to perform the steps of:
- providing the actual plate position of the dump plate (18) based on the one or more plate position signals (42);
- comparing the actual plate position with a previous plate position of the dump plate (18); and
- determining that the actual plate position has changed if the actual plate position differs from the previous plate position.

21. The dump plate system (10a, 10b) according to claim 20, wherein the computer program comprises program code which, when executed by the at least one data processing device (36), causes the at least one data processing device (36) to perform the step of:
- commanding issuance of a warning upon determining that the actual plate position has changed.

22. A method of handling a dump plate device (16) having a dump plate (18) for supporting a vehicle (24) adjacent to an edge (14) at a worksite (12) when dumping a load over the edge (14) by the vehicle (24), wherein the method comprises:
- wirelessly transmitting (S1) one or more plate position signals (42) containing information indicative of an actual plate position of the dump plate (18) by means of at least one positioning device (40, 62) fixed to the dump plate (18).

23. The method according to claim 22, wherein the method further comprises:
- determining (S2) whether the actual plate position of the dump plate (18) has changed.

24. The method according to claim 23, wherein the method further comprises:
- issuing (S3) a warning upon determining that the actual plate position of the dump plate (18) has changed.

25. The method according to any of claims 22 to 24, further comprising controlling an autonomous vehicle (24) based on the actual plate position of the dump plate (18).

26. The method according to any of claims 22 to 25, further comprising:
- moving the dump plate device (16) by means of a vehicle (30, 56);
- determining a coarse plate position of the dump plate (18) based on a vehicle position of the vehicle (30, 56) after having moved the dump plate device (16); and
- determining the actual plate position of the dump plate (18) by means of the at least one positioning device (40, 62) based on the coarse plate position.

## Patentansprüche

1. Kippplattenvorrichtung (16) umfassend:
- eine Kippplatte (18) zum Abstützen eines Fahrzeugs (24) neben einer Kante (14) an einer Baustelle (12), wenn das Fahrzeug (24) eine Last über die Kante (14) kippt;
wobei die Kippplattenvorrichtung (16) ferner umfasst:
- mindestens eine Positionierungsvorrichtung (40, 62), die an der Kippplatte (18) befestigt ist, wobei jede Positionierungsvorrichtung (40, 62) konfiguriert ist, um drahtlos eines oder mehrere Plattenpositionssignale (42) zu übertragen, die Informationen enthalten, die eine aktuelle Plattenposition der Kippplatte (18) anzeigen.

2. Kippplattenvorrichtung (16) nach Anspruch 1, wobei jede Positionierungsvorrichtung (40, 62) einen Satellitenkommunikationsempfänger (40) umfasst.

3. Kippplattenvorrichtung (16) nach einem der vorhergehenden Ansprüche, wobei jede Positionierungsvorrichtung (40, 62) einen Funksender (62) umfasst.

4. Kippplattenvorrichtung (16) nach Anspruch 3, wobei der Funksender (62) ein Ultrabreitband-Sender (UWB) ist.

5. Kippplattenvorrichtung (16) nach einem der vorhergehenden Ansprüche, wobei eines oder mehrere Plattenpositionssignale (42) Informationen enthalten, die eine absolute Position der Kippplatte (18) anzeigen.

6. Kippplattenvorrichtung (16) nach einem der vorhergehenden Ansprüche, wobei die mindestens eine Positionierungsvorrichtung (40, 62) mehrere voneinander beabstandete Positionierungsvorrichtungen (40, 62) umfasst.

7. Kippplattenvorrichtung (16) nach einem der vorhergehenden Ansprüche, wobei eines oder mehrere Plattenpositionssignale (42) Informationen enthalten, die eine Ausrichtung der Kippplatte (18) anzeigen.

8. Kippplattenvorrichtung (16) nach einem der vorhergehenden Ansprüche, wobei die Kippplatte (18) ein Basisteil (20) und eine gegenüber dem Basisteil (20) erhöhte Barriere (22) umfasst, wobei die Barriere (22) konfiguriert ist, um von zwei Rädern (26) des Fahrzeugs (24) berührt zu werden, wenn das Fahrzeug (24) die Last über die Kante (14) kippt.

9. Kippplattenvorrichtung (16) nach Anspruch 8, wobei eines oder mehrere Plattenpositionssignale (42) Informationen enthalten, die eine Barriereposition der Barriere (22) anzeigen.

10. Kippplattenvorrichtung (16) nach Anspruch 8, wobei eine Barriereposition der Barriere (22) in Bezug auf die tatsächliche Plattenposition vorgegeben ist.

11. Kippplattensystem (10a, 10b) umfassend eine Kippplattenvorrichtung (16) nach einem der vorhergehenden Ansprüche.

12. Kippplattensystem (10a, 10b) nach Anspruch 11, ferner umfassend mindestens einen Empfänger (44, 52), der konfiguriert ist, um eines oder mehrere Plattenpositionssignale (42) zu empfangen, die von mindestens einer Positionierungsvorrichtung (40, 62) übertragen werden.

13. Kippplattensystem (10a, 10b) nach Anspruch 11 oder 12, ferner umfassend das Fahrzeug (24).

14. Kippplattensystem (10a, 10b) nach Anspruch 13, wobei das Fahrzeug (24) ein autonomes Fahrzeug ist.

15. Kippplattensystem (10a, 10b) nach Anspruch 13 oder 14, wenn abhängig von Anspruch 12, wobei das Fahrzeug (24) einen oder mehrere der mindestens einen Empfänger (44) umfasst.

16. Kippplattensystem (10a, 10b) nach Anspruch 15, wobei das Fahrzeug (24) konfiguriert ist, um die tatsächliche Plattenposition der Kippplatte (18) basierend auf einem oder mehreren Plattenpositionssignalen (42) zu bestimmen.

17. Kippplattensystem (10a, 10b) nach Anspruch 12, wobei das Fahrzeug (24) konfiguriert ist, um Positionsdaten (48) zu erzeugen, die die tatsächliche Plattenposition der Kippplatte (18) basierend auf einem oder mehreren Plattenpositionssignalen (42) anzeigen.

18. Kippplattensystem (10a, 10b) nach Anspruch 12, ferner umfassend mindestens eine stationäre Basisstation (50) umfassend einen oder mehrere des
mindestens einen Empfängers (52), wobei die mindestens eine Basisstation (50) konfiguriert ist, um eines oder mehrere Plattenpositionssignale (42) zu empfangen, die von mindestens einer Positionierungsvorrichtung (40, 62) übertragen werden, und um Positionsdaten (48) zu erzeugen, die die tatsächliche Plattenposition der Kippplatte (18) basierend auf einem oder mehreren Plattenpositionssignalen (42) anzeigen.

19. Kippplattensystem (10a, 10b) nach Anspruch 18, wenn abhängig von Anspruch 13, wobei das Fahrzeug (24) konfiguriert ist, um die Positionsdaten (48) drahtlos zu empfangen.

20. Kippplattensystem (10a, 10b) nach einem der Ansprüche 11 bis 19, ferner umfassend ein Steuerungssystem (34), das Steuerungssystem (34) umfassend mindestens eine Datenverarbeitungsvorrichtung (36) und mindestens einen Speicher (38) mit einem darauf gespeicherten Computerprogramm, wobei das Computerprogramm einen Programmcode umfasst, der, wenn er von mindestens einer Datenverarbeitungsvorrichtung (36) ausgeführt wird, die mindestens eine Datenverarbeitungsvorrichtung (36) veranlasst, die folgenden Schritte durchzuführen:
- Bereitstellen der tatsächlichen Plattenposition der Kippplatte (18) basierend auf einem oder mehreren Plattenpositionssignalen (42);
- Vergleichen der tatsächlichen Plattenposition mit einer vorherigen Plattenposition der Kippplatte (18); und
- Bestimmen, dass sich die tatsächliche Plattenposition geändert hat, wenn die tatsächliche Plattenposition von der vorherigen Plattenposition abweicht.

21. Kippplattensystem (10a, 10b) nach Anspruch 20, wobei das Computerprogramm einen Programmcode umfasst, der, wenn er von mindestens einer Datenverarbeitungsvorrichtung (36) ausgeführt wird, die mindestens eine Datenverarbeitungsvorrichtung (36) veranlasst, den folgenden Schritt durchzuführen:
- Anweisung der Ausgabe einer Warnung, wenn bestimmt wird, dass sich die tatsächliche Plattenposition geändert hat.

22. Verfahren zum Handhaben einer Kippplattenvorrichtung (16) mit einer Kippplatte (18) zum Abstützen eines Fahrzeugs (24) neben einer Kante (14) an einer Baustelle (12), wenn eine Last durch das Fahrzeug (24) über die Kante (14) gekippt wird, wobei das Verfahren umfasst:
- drahtloses Übertragen (S1) eines oder mehrerer Plattenpositionssignale (42), die Informationen enthalten, die eine tatsächliche Plattenposition der Kippplatte (18) anzeigen, mittels mindestens einer Positionierungsvorrichtung (40, 62), die an der Kippplatte (18) befestigt ist.

23. Verfahren nach Anspruch 22, wobei das Verfahren ferner umfasst:
- Bestimmen (S2), ob sich die tatsächliche Plattenposition der Kippplatte (18) geändert hat.

24. Verfahren nach Anspruch 23, wobei das Verfahren ferner umfasst:
- Ausgabe (S3) einer Warnung, wenn bestimmt wird, dass sich die tatsächliche Position der Kippplatte (18) geändert hat.

25. Verfahren nach einem der Ansprüche 22 bis 24, ferner umfassend die Steuerung eines autonomen Fahrzeugs (24) basierend auf der tatsächlichen Plattenposition der Kippplatte (18).

26. Verfahren nach einem der Ansprüche 22 bis 25, ferner umfassend:
- Bewegen der Kippplattenvorrichtung (16) mittels eines Fahrzeugs (30, 56);
- Bestimmen einer ungefähren Plattenposition der Kippplatte (18) basierend auf einer Fahrzeugposition des Fahrzeugs (30, 56), nachdem die Kippplattenvorrichtung (16) bewegt wurde; und
- Bestimmen der tatsächlichen Plattenposition der Kippplatte (18) mittels mindestens einer Positionierungsvorrichtung (40, 62) basierend auf der ungefähren Plattenposition.

## Revendications

1. Dispositif de plaque basculante (16) comprenant :
- une plaque basculante (18) destinée à supporter un véhicule (24) adjacent à un bord (14) sur un lieu de travail (12) lors du basculement d'une charge sur le bord (14) par le véhicule (24) ;
le dispositif de plaque basculante (16) comprenant en outre :
- au moins un dispositif de positionnement (40, 62) fixé à la plaque basculante (18), chaque dispositif de positionnement (40, 62) étant configuré pour transmettre sans fil un ou plusieurs signaux de position de plaque (42) contenant des informations indicatives d'une position actuelle de plaque de la plaque basculante (18).

2. Dispositif de plaque basculante (16) selon la revendication 1, dans lequel chaque dispositif de positionnement (40, 62) comprend un récepteur de communication satellitaire (40).

3. Dispositif de plaque basculante (16) selon l'une quelconque des revendications précédentes, dans lequel chaque dispositif de positionnement (40, 62) comprend un radiotransmetteur (62).

4. Dispositif de plaque basculante (16) selon la revendication 3, dans lequel le radiotransmetteur (62) est un transmetteur à bande ultralarge UWB.

5. Dispositif de plaque basculante (16) selon l'une quelconque des revendications précédentes, dans lequel le ou les signaux de position de plaque (42) contiennent des informations indicatives d'une position absolue de la plaque basculante (18).

6. Dispositif de plaque basculante (16) selon l'une quelconque des revendications précédentes, dans lequel l'au moins un dispositif de positionnement (40, 62) comprend une pluralité de dispositifs de positionnement (40, 62) espacés les uns des autres.

7. Dispositif de plaque basculante (16) selon l'une quelconque des revendications précédentes, dans lequel le ou les signaux de position de plaque (42) contiennent des informations indicatives d'une orientation de la plaque basculante (18).

8. Dispositif de plaque basculante (16) selon l'une quelconque des revendications précédentes, dans lequel la plaque basculante (18) comprend une pièce de base (20) et une barrière (22) surélevée par rapport à la pièce de base (20), la barrière (22) étant configurée pour être en contact avec deux roues (26) du véhicule (24) lors du basculement de la charge sur le bord (14) par le véhicule (24).

9. Dispositif de plaque basculante (16) selon la revendication 8, dans lequel le ou les signaux de position de plaque (42) contiennent des informations indicatives d'une position de barrière de la barrière (22) .

10. Dispositif de plaque basculante (16) selon la revendication 8, dans lequel une position de barrière de la barrière (22) par rapport à la position actuelle de la plaque est prédéterminée.

11. Système de plaque basculante (10a, 10b) comprenant un dispositif de plaque basculante (16) selon l'une quelconque des revendications précédentes.

12. Système de plaque basculante (10a, 10b) selon la revendication 11, comprenant en outre au moins un récepteur (44, 52) configuré pour recevoir le ou les signaux de positionnement (42) transmis depuis l'au moins un dispositif de positionnement (40, 62).

13. Système de plaque basculante (10a, 10b) selon la revendication 11 ou 12, comprenant en outre le véhicule (24).

14. Système de plaque basculante (10a, 10b) selon la revendication 13, dans lequel le véhicule (24) est un véhicule autonome.

15. Système de plaque basculante (10a, 10b) selon la revendication 13 ou 14, dans le cas de dépendance vis-à-vis de la revendication 12, dans lequel le véhicule (24) comprend un ou plusieurs exemplaires de l'au moins un récepteur (44).

16. Système de plaque basculante (10a, 10b) selon la revendication 15, dans lequel le véhicule (24) est configuré pour déterminer la position actuelle de plaque de la plaque basculante (18) en se basant sur le ou les signaux de position de plaque (42).

17. Système de plaque basculante (10a, 10b) dans le cas de dépendance vis-à-vis de la revendication 12, dans lequel le véhicule (24) est configuré pour générer des données de position (48) indicatives de la position actuelle de plaque de la plaque basculante (18) en se basant sur le ou les signaux de position de plaque (42) .

18. Système de plaque basculante (10a, 10b) dans le cas de dépendance vis-à-vis de la revendication 12, comprenant en outre au moins une station de base stationnaire (50) comprenant un ou plusieurs exemplaires de l'au moins un récepteur (52), l'au moins une station de base (50) étant configurée pour recevoir le ou les signaux de position de plaque (42) transmis par l'au moins un dispositif de positionnement (40, 62) et pour générer des données de position (48) indicatives de la position actuelle de plaque de la plaque basculante (18) en se basant sur le ou les signaux de position de plaque (42).

19. Système de plaque basculante (10a, 10b) selon la revendication 18, dans le cas de dépendance vis-à-vis de la revendication 13, dans lequel le véhicule (24) est configuré pour recevoir sans fil les données de position (48).

20. Système de plaque basculante (10a, 10b) selon l'une quelconque des revendications 11 à 19, comprenant en outre un système de commande (34), le système de commande (34) comprenant au moins un dispositif de traitement de données (36) et au moins une mémoire (38) sur laquelle est enregistré un programme informatique, le programme informatique comprenant un code de programme qui, une fois exécuté par l'au moins un dispositif de traitement de données (36), amène l'au moins un dispositif de traitement de données (36) à réaliser les étapes suivantes :
- fourniture de la position actuelle de plaque de la plaque basculante (18) en se basant sur le ou les signaux de position de plaque (42) ;
- comparaison de la position actuelle de plaque avec une position précédente de plaque de la plaque basculante (18) ; et
- détermination que la position actuelle de plaque a changé si la position actuelle de plaque diffère de la position précédente de plaque.

21. Système de plaque basculante (10a, 10b) selon la revendication 20, dans lequel le programme informatique comprend un code de programme qui, une fois exécuté par l'au moins un dispositif de traitement de données (36), amène l'au moins un dispositif de traitement de données (36) à réaliser l'étape de :
- commande d'émission d'une alarme en cas de détermination que la position actuelle de plaque a changé.

22. Procédé de manipulation d'un dispositif de plaque basculante (16) comportant une plaque basculante (18) destinée à supporter un véhicule (24) adjacent à un bord (14) sur un lieu de travail (12) lors du basculement d'une charge sur le bord (14) par le véhicule (24), ce procédé comprenant :
- la transmission sans fil (S1) d'un ou plusieurs signaux de position de plaque (42) contenant des informations indicatives d'une position actuelle de plaque de la plaque basculante (18) au moyen d'au moins un dispositif de positionnement (40, 62) fixé à la plaque basculante (18).

23. Procédé selon la revendication 22, ce procédé comprenant en outre :
- la détermination (S2) si la position actuelle de plaque de la plaque basculante (18) a changé.

24. Procédé selon la revendication 23, ce procédé comprenant en outre :
- l'émission (S3) d'une alarme en cas de détermination que la position actuelle de plaque de la plaque basculante (18) a changé.

25. Procédé selon l'une quelconque des revendications 22 à 24, comprenant en outre la commande d'un véhicule autonome (24) en se basant sur la position actuelle de plaque de la plaque basculante (18).

26. Procédé selon l'une quelconque des revendications 22 à 25, comprenant en outre :
- le déplacement du dispositif de plaque basculante (16) au moyen d'un véhicule (30, 56) ;
- la détermination d'une position de plaque approximative de la plaque basculante (18) en se basant sur une position de véhicule du véhicule (30, 56) après avoir déplacé le dispositif de plaque basculante (16) ; et
- la détermination de la position actuelle de plaque de la plaque basculante (18) au moyen de l'au moins un dispositif de positionnement (40, 62) en se basant sur la position approximative de la plaque.
